# EUROPEAN PATENT APPLICATION

(11) **EP 4 622 022 A1**
(43) Date of publication of application: **24.09.2025**
(21) Application number: 25164606.3
(22) Date of filing: 19.03.2025
(51) Int. Cl.: H01R 13/6596, H01R 13/74, H01R 13/53

(54) **CONNECTOR KIT, MANUFACTURING METHOD FOR A CONNECTOR KIT, AND CONNECTION METHOD TO A CONNECTOR KIT**

(30) Priority: 20.03.2024 DE 102024107961
(71) Applicant: TE Connectivity Solutions GmbH, 8200 Schaffhausen (CH)
(72) Inventor: KEIL, Kevin, 8200 Schaffhausen (CH)
(74) Representative: Grünecker Patent- und Rechtsanwälte PartG mbB

(57) **Abstract**

The present invention relates to a connector kit (100) for connecting a shielded high-voltage conductor to an aggregate, the connector kit (100) comprising: a power connector (120) for contacting a cable core (144) of the shielded high-voltage conductor to a mating connector of the aggregate in the plugging direction (S), a shield header (110) with a manufacturer-defined shield header contact (112, 114), wherein the shield header (110) forms a shield path at least in part between a shield conductor (142) of the shielded high-voltage conductor and a shield housing (1200) of the aggregate, and wherein the shield housing (1200) comprises a user-defined interface opening (1210) so that the mating connector is contactable to the power connector, a multifunctional adapter (300) with a user-defined aggregate connection section (312) for the electromechanical coupling to the shield housing (1200) of the aggregate and a manufacturer-defined shield header opening (320) extending perpendicular to the plugging direction (S) so that the power connector is contactable to the mating connector, wherein the multifunctional adapter (300) and the shield header contact (112) can be coupled to form a unit so that an adapter section (310) between the user-defined aggregate connection section (312) and the manufacturer-defined shield header opening (320) electrically closes the shield path between the shield housing (1200) of the aggregate and the shield conductor (142).

## Description

The invention relates to a connector kit and a manufacturing method suitable for it. The invention furthermore relates to a method for connecting an aggregate to a shielded high-voltage conductor using such a connector kit.

In the vehicle industry in particular, a plurality of aggregates is used that require electrical shielding. For this purpose, the aggregate is typically provided with a shield housing. Furthermore, the aggregate is supplied with power, in particular in the form of high voltage. Shielded high-voltage conductors can be used for this. It can be necessary for the high-voltage conductor to be connected to the shield housing. The plurality of aggregates requires a plurality of adaptations and the shielding makes the adaptations complex.

The invention is based on the object of creating a connector that meets at least one of the above requirements better and in a more cost-effective or more simple manner.

The above objects are satisfied by the object of the independent claims. Advantageous further developments are the object of the dependent claims.

A non-restricting and exemplary aspect simplifies the provision of a shield path between a shield housing of an aggregate and a shield conductor of a shielded high-voltage conductor.

A first aspect relates to a connector kit for connecting a shielded high-voltage conductor to an aggregate. The connector kit comprises a power connector for contacting a cable core of the shielded high-voltage conductor to a mating connector of the aggregate in the plugging direction. Furthermore, the connector kit comprises a shield header with a manufacturer-defined shield header contact, wherein the shield header forms a shield path at least in part between a shield conductor of the shielded high-voltage conductor and a shield housing of the aggregate and wherein the shield housing comprises a user-defined interface opening so that the mating connector is contactable to the power connector. The connector kit furthermore comprises a multifunctional adapter with a user-defined aggregate connection section for the electromechanical coupling with the shield housing of the aggregate and a manufacturer-defined shield header opening extending perpendicular to the plugging direction so that the power connector is contactable to the mating connector, wherein the multifunctional adapter and the shield header contact can be coupled to form a unit so that an adapter section between the user-defined aggregate connection section and the manufacturer-defined shield header opening electrically closes the shield path between the shield housing of the aggregate and the shield conductor.

The multifunctional adapter enables an existing shielded high-voltage conductor to be easily adapted to a user's shield housing without redesign.

In particular, the shape and material of the multifunctional adapter can be adapted to the existing shielded high-voltage conductor independently of the customer so that structurally complex parts only need to be modified slightly or not at all.

The connector kit enables a suitable solution for a manufacturer's entire portfolio. Shielding is simplified because a cost-effective, modular, and scalable additional component, namely the multifunctional adapter, is provided. This also enables high flexibility with regard to user changes and less impact on the manufacturer system. In particular, contacting, in particular grounding, is improved because an enlarged contact surface can also be provided.

A second aspect relates to a connector kit according to aspect 1 and comprises a second multifunctional adapter. The second multifunctional adapter comprises a second user-defined aggregate connection section for the electromechanical coupling to a second shield housing of a second aggregate and a second manufacturer-defined shield header opening extending perpendicular to the plugging direction so that the power connector is contactable to the mating connector, wherein the second user-defined aggregate connection section differs from the user-defined aggregate connection section in shape and wherein the second manufacturer-defined shield header opening and the manufacturer-defined shield header opening have the same shape.

The connector kit enables an existing shielded high-voltage conductor to be easily adapted to a user's shield housing without the need to newly design.

A third aspect relates to a connector kit according to one of the preceding aspects, wherein an adapter contact surface of the aggregate connection section electrically contacts the shield housing in the plugging direction, in particular wherein the adapter contact surface is structured, wherein a structure perpendicular to the plugging direction has an extension of greater than or equal to 0.1 µm and less than or equal to 5 mm and the structure in the plugging direction has an extension of greater than or equal to 0.1 mm and less than or equal to 2 mm.

The connector kit thus enables a simple connection to the shield housing, i.e. in the plugging direction, and the setup enables low contact resistance.

A fourth aspect relates to a connector kit according to one of the preceding aspects, wherein a passage recess, also referred to as a passage bore, penetrates the aggregate connection section in the plugging direction, wherein the passage recess serves to receive a fastening element for fastening the multifunctional adapter to the shield housing.

The connector kit thus enables a lasting connection to the shield housing.

A fifth aspect relates to a connector kit according to aspect 4, wherein the passage recess comprises an elongate hole.

The connector kit thus allows for large tolerances in the connection to the shield housing.

A sixth aspect relates to a connector kit according to one of the preceding aspects, wherein the multifunctional adapter and the shield header are coupled to form an inseparable unit, in particular wherein the power connector, the shield header, and the multifunctional adapter are inseparably connected to one another.

The connector kit thus enables easy handling by the user, since the parts are already connected to one another by the manufacturer and the number of parts is then reduced.

A seventh aspect relates to a connector kit according to one of the preceding aspects, furthermore comprising a connector housing, wherein the multifunctional adapter and the shield header are coupled to form a unit in the connector housing, in particular wherein the shield header and the multifunctional adapter are inseparably connected to one another.

The connector kit thus enables easy handling by the user, for the reason that the parts are already coupled by the manufacturer and the number of parts is then reduced, increases stability for the reason that the parts are coupled, and increases safety for the reason that an insulating housing can protect against electric shocks.

An eighth aspect relates to a connector kit according to aspect 7, wherein the connector housing comprises an injection-molded member that is injection-molded at least in part around the multifunctional adapter and the shield header.

The connector kit thus enables simple manufacturing.

A ninth aspect relates to a connector kit according to one of the preceding aspects, wherein the manufacturer-defined shield header contact contacts the multifunctional adapter in the manufacturer-defined shield header opening perpendicular to the plugging direction.

The connector kit thus enables simple manufacturing, since the shield header contact and shield header opening can only be coupled by a force-fit connection.

A tenth aspect relates to a connector kit according to one of the preceding claims, furthermore comprising a crimp connection for closing the shield path between the shield header and the shield conductor of the shielded high-voltage conductor.

The connector kit then enables simple manufacturing.

An eleventh aspect relates to a connector kit according to one of the preceding claims, wherein the multifunctional adapter comprises a plurality of manufacturer-defined shield header openings so that a plurality of power connectors is contactable to a plurality of mating connectors.

The connector kit then enables a connection to a plurality of power connectors.

A twelfth aspect relates to a manufacturing method for a connector kit for connecting a shielded high-voltage conductor to an aggregate, the manufacturing method comprising:
providing a power connector for contacting a cable core of the shielded high-voltage conductor to a mating connector of the aggregate in the plugging direction,
providing a shield header with a manufacturer-defined shield header contact, wherein the shield header forms a shield path at least in part between a shield conductor of the shielded high-voltage conductor and a shield housing of the aggregate and wherein the shield housing comprises a user-defined interface opening so that the mating connector is contactable to the power connector,
manufacturing a multifunctional adapter with a user-defined aggregate connection section for the electromechanical coupling to the shield housing of the aggregate and a manufacturer-defined shield header opening extending perpendicular to the plugging direction so that the power connector is contactable to the mating connector,
coupling the multifunctional adapter and the shield header to form a unit so that an adapter section between the user-defined aggregate connection section and the manufacturer-defined shield header opening electrically closes the shield path between the shield housing of the aggregate and the shield conductor.

A twelfth aspect has the same advantages as the first aspect. The twelfth aspect can be combined with any of the aspects 1 to 11.

For example, a thirteenth aspect similar to the seventh aspect relates to a manufacturing method according to aspect 12, furthermore comprising the step of:
housing integration of the multifunctional adapter and the shield header into a connector housing, in particular wherein the housing integration comprises an injection molding process for producing the connector housing as an injection-molded member.

A fourteenth aspect relates to connection methods for electrically closing a shield path between a shield conductor of a shielded high-voltage conductor and a shield housing of an aggregate, the method comprising:
providing a connector kit (100) according to one of the preceding aspects 1 to 13 or manufactured according to the method according to one of the preceding aspects 12 to 13,
electrically contacting an adapter contact surface of the aggregate connection section to the shield housing in the plugging direction.

The method therefore enables a shielded connection that is particularly simple to implement.

The fourteenth aspect has the same advantages as the first aspect. The fourteenth aspect can be combined with any of the aspects 1 to 13.

A fifteenth aspect relates to a connection method according to aspect 14 similar to the fourth aspect, the method furthermore comprising:
mechanically connecting the aggregate connection section to the shield housing,
in particular, the mechanical connection furthermore comprising:
   guiding a fastening element through a passage recess that penetrates the aggregate connection section in the plugging direction, and
   fixing the fastening element in a fastening element receptacle of the shield housing.

For a better understanding of the present invention, it is explained in more detail using the exemplary embodiments shown in the following figures. Same parts are provided with same reference numerals and same component designations. In addition, individual features or combinations of features of the different examples shown and described can themselves also represent independent, inventive solutions or those according to the invention.

The present invention shall now be described by way of the figures,
where:
**Fig. 1** shows a schematic view of a connection of an aggregate to a shielded high-voltage conductor using a multifunctional adapter;
**Fig. 2** shows a schematic sectional view of the connection from Figure 1 according to a first example;
**Fig. 3** shows an example of a multifunctional adapter in a sectional view;
**Fig. 4** shows a further example of a multifunctional adapter in a sectional view;
**Fig. 5** shows a schematic sectional view of the connection from Figure 1 according to a second example;
**Fig. 6** shows a further example of a multifunctional adapter in a sectional view;
**Fig. 7** shows a further example of a multifunctional adapter in a sectional view;
**Fig. 8** shows an example of a multifunctional adapter in a top view;
**Fig. 9** shows a further example of a multifunctional adapter in a top view;
**Fig. 10**shows a further example of a multifunctional adapter in a top view;
**Fig. 11** shows a further example of a multifunctional adapter in a top view;
**Fig. 12**shows a further example of a multifunctional adapter in a top view;
**Fig. 13**shows a further example of a multifunctional adapter in a top view;
**Fig. 14** shows a side view of the connection of an aggregate to a shielded high-voltage **conductor** using a multifunctional adapter according to an example;
**Fig. 15**shows a sectional view of Figure 14 with the aggregate;
**Fig.16** shows a further sectional view of Figure 14 with the aggregate;
**Fig. 17** shows a side view of Figure 14 according to an alternative;
**Fig. 18** shows parts of a connector kit according to an example in a further view;
**Fig. 19**shows a shield housing with an interface opening for connecting to a high-voltage conductor,
**Fig. 20** shows a schematic view of a connection of the aggregate to a shielded high-voltage conductor; and
**Fig. 21** shows a sectional view of the shield housing according to Figure 19 with a user adapter.

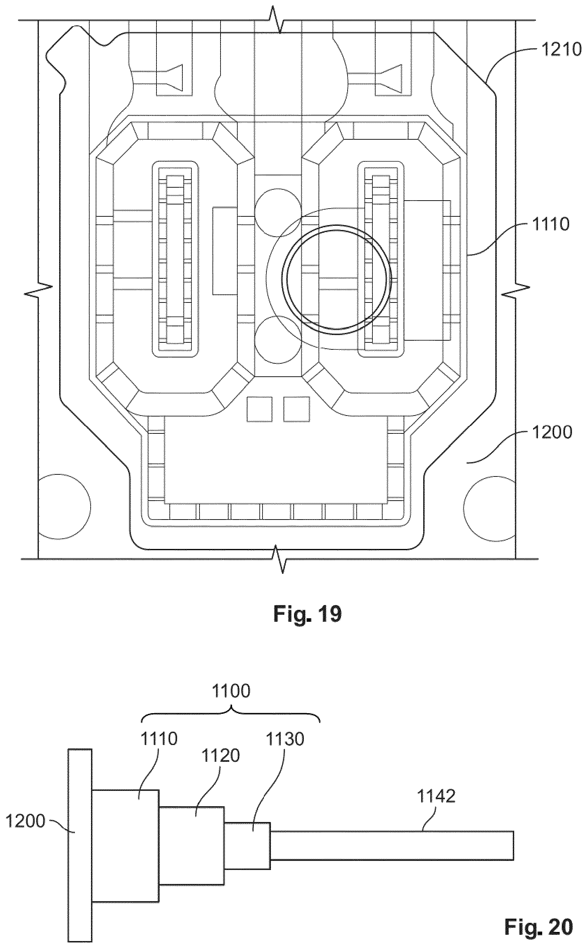

As shown, for example, in Figure 19, shield housing 1200 of an aggregate is typically provided with a user-defined interface opening 1210. Interface opening 1210 is used to contact a power connector with a mating connector. The arrangement and shape of interface opening 1210 is typically limited by the installation space and is specified by the user. Interface opening 1210 can therefore not typically be influenced by the manufacturer of a connector.

In addition to the aggregate, it can also be provided, for example, by an end customer, that the power supply be shielded. In addition, it can be necessary for the shield of the power supply to be connected to shield housing 1200. For this purpose, the shielded high-voltage conductor can comprise a shield header 1110 comprising a shield header contact. The dimensions of shield header 1110 and the shield header contacts can be specified by the manufacturer of the connector and a large number of manufacturer-specific catalog products typically exists.

It follows that the shapes of the user-defined interface opening defined by the installation space and the manufacturer-defined shield header contact are not coordinated with one another. This is detrimental to the electromechanical coupling. The lack of fit leads in particular to the shield path being insufficiently or not at all electrically contacted and there being insufficient shielding in the region of contact and/or the potentials on the shield housing and shield header not being the same.

As shown in Figure 20, a shield header 1110 must therefore be adapted to the interface opening of shield housing 1200. This requires an adaptation of the other components of high-voltage plugging system 1100. High-voltage plugging system 1100 typically comprises shield header 1110, a power connector 1120 for contacting a cable core (not shown) of the shielded high-voltage conductor to a mating connector (not shown) of the aggregate. This adaptation is costly and labor-intensive. Furthermore, high-voltage plugging system 1100 comprises a connection, for example, a crimp connection 1130, for closing the shield path between shield header 1110 and a shield conductor 1142 of the shielded high-voltage conductor. This connection as well must be adapted.

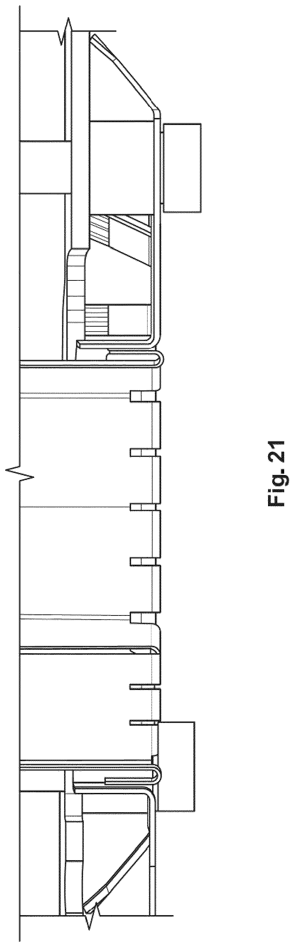

Alternatively, the user can provide a user adapter, as shown in Figure 21, to adapt the shield header opening to the shield header. It has been shown that such a shield header opening of the user adapter has poor shielding properties and is expensive to manufacture.

In particular, the shield housing of the aggregate can be made of materials that make it difficult to establish a secure contact over the service life. Furthermore, the shield header openings can be variable in shape, which has a major influence on the adaptation of the shield header contact and of the power connector in the header. This leads to complex shape and shielding adaptations, which also increases costs. Furthermore, different requirements for shielding the aggregate and for the connector can exist, wherein the requirements for the connector in terms of shielding are typically higher. Since the connection between the connector and the aggregate is effected at a low, if not the lowest system level, the adaptation of the shield header contact and of the power connector is associated with high costs as it affects all higher system levels. The above issues increase costs for the adaptation of the connector because the user employs a user-defined interface opening. This enormous adaptation of the shielding of connectors affects the entire product portfolio of a connector manufacturer. However, due to the large number of possible aggregates with different performance requirements, no standard for the shield header has yet been able to prevail.

The invention is also based on the object of creating a connector that meets at least one of the above requirements better and in a more cost-effective or more simple manner.

In the following description, a **kit,** also referred to as a construction kit, is understood to mean a collection of connector parts and accessories required for specific users or operators. These kits can contain different types of connectors, such as headers and power connectors, which are manufactured specifically for applications in the automotive industry. A connector kit contains a plurality of components including male and female power connectors and shield headers, both in different sizes and configurations, adapters, cables, protective covers, tools and instructions for assembly or installation.

A kit enables the user to obtain all the components needed for the specific requirements without the component having to be modified by the manufacturer specifically for the application.

A **shielded high-voltage conductor** is a cable that is specifically designed to carry high-voltage current and at the same time contains measures for reducing or shielding electromagnetic interference (EMI).

For example, a shielded high-voltage conductor consists of one or more insulated conductors, hereinafter referred to as the cable core, which are surrounded by an outer shield, hereinafter referred to as the shield conductor. The shield conductor can be made of a metal braid, metal foil, or other conductive material.

The shield conductor makes it possible to control electric fields and minimize the propagation of electromagnetic interference that can be generated by the high voltage. This reduces interference with neighboring electronic devices and increases safety.

Shielded high voltage conductors are used in various applications, such as in power transmission, in high voltage grids, in high voltage testing, in medical equipment and in high voltage laboratories. The specific design and construction of such conductors depends on the specific requirements of the application and the safety standards and regulations to be followed.

In the automotive industry, high voltages can be used for various applications, in particular for electric and hybrid vehicles and for certain electrical systems in conventional vehicles. The battery voltage in electric and hybrid vehicles is typically between 200 and 800 volts. This voltage makes it possible for the required power to be provided to the electric motor. The high voltage in the electric drive systems of vehicles can vary depending on the type and power requirements. Typical voltage values often range from 400 volts to several kilovolts (kV). The high-voltage electrical system in electric or hybrid vehicles can comprise voltages ranging from 12 volts to several hundred volts for operating various components of the vehicle system such as lighting, air conditioning, infotainment, etc. High voltages are also used in chargers and charging infrastructure for electric vehicles to supply the batteries with energy. The voltages can vary depending on the charging technology and charging power.

An **aggregate** is presently understood to be an assembled unit or a group of components that performs a specific function. This function can vary, e.g. in the automotive industry from drive aggregates, such as the engine and transmission, to auxiliary aggregates, such as the air conditioning compressor or power steering.

Examples of aggregates are the engine aggregate, the transmission aggregate, the air conditioning aggregate, electrical aggregates such as generators, starter motors, batteries, chargers and charging infrastructure that are necessary for the power supply and operation of electrical systems in the vehicle, as well as safety aggregates, such as airbags, belt tensioners, ABS systems.

In general, the term aggregate refers to unit or a group of components that perform a specific function and can be viewed as independent modules within a higher-level unit, e.g. the vehicle.

A **power connector** in the field of electrical connectors is a device that is used to connect two or more electrical cable wires together and to establish electrical connections. The power connectors enable a reliable electrical connection to ensure the flow of current, especially in the high voltage range, between the cable core and a mating connector of an aggregate.

Different types of electrical power connectors exist that can be configured differently depending on the field of application and system requirements. In general, the electrical connector is a plug or a socket. A plug contains pins, while a socket is configured to receive the pins. When the plug and the socket are plugged together, the electrical connection is established.

Alternatively, for example, clamp, solder, crimp and screw connectors exist and also enable the power connection presently described.

A **header** is a component that is used in connection with the power connector. The power connector is also sometimes referred to as a contact tab. A **shield header** is a header that additionally shields the power connector, i.e. is part of a shield path around the power connector. The shield conductor has a shield header contact defined by the manufacturer. The shield header can have a hollow cylindrical shape with a polygonal base area to enable shielding of the power connector in the circumferential direction. The polygonal base area of the shield header can be, for example, round or rectangular. Different shapes of the shield header can be defined by the manufacturer.

The shield header furthermore comprises shield header contacts that enable connecting the shield header to a mating connector, in particular a shield header opening. The shield header contact there interacts with the shield header opening, wherein the shield header opening is adapted to the geometry of the shield header to enable the electrical connection. The shield header contacts can be specified by the manufacturer of the connector. In order to enable, for example, a good electrical connection of the shield header to the mating connector, the shield header contact can comprise a series of pins, contact elements, and/or clamping elements that protrude from the surface or are arranged on the surface. A good electrical connection of the shield header is understood to mean in particular a low transfer impedance and long-term stability of the connection.

A **multifunctional adapter** is presently understood to be a component that provides connection options for various aggregates. The multifunctional adapter therefore enables versatile use and can establish compatibility between various user-specific aggregates and manufacturer-specific shield headers, in particular the shield header contacts.

The **shield path** is the electrical or electromagnetic path provided by a shielding material to enable the dissipation and/or absorption of EMI generated, for example, by the high voltage carried in the cable core. The shielding therefore makes it possible to protect sensitive signals outside and/or inside the aggregate and the high-voltage conductor from interference and diverts interference currents that are present on the shield path to ground and/or to aggregate ground. A shield path is therefore the path along which interference is diverted and absorbed. An example of a shielded high-voltage conductor is a coax cable. In a coax cable, the cable core that carries the high voltage is surrounded by outer shielding material.

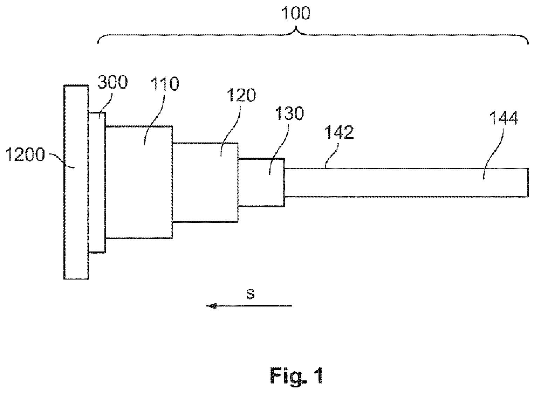

Figure 1 shows a first example of a connector kit 100. Connector kit 100 enables the connection of a shielded high-voltage conductor, which comprises a cable core 144 and a shield conductor 142, to an aggregate.

The connector kit comprises a shield header 110, a power connector 120, and a multifunctional adapter 300. Power connector 120 is presently shown separate from shield header 110 but can also be arranged within shield header 110. A shielded connector can be additionally provided between the header and the shielded high-voltage conductor. Connector kit 100 can additionally comprise the shielded high-voltage conductor. Connector kit 100 can furthermore contain a crimp connection 120.

The connector kit therefore enables a shield path. It connects shield housing 1200 of the aggregate to the multifunctional adapter 300, then to shield header 110: the shield path can furthermore connect to a shield of the connector, to a crimp connection 130, and to cable shield 142.

The connector kit also enables a power path. The power path can comprise a mating connector in the aggregate, for example, a busbar and a power connector 120. The power path can additionally comprise a power connector of the connector, a power crimp and cable core 144 of the high-voltage conductor.

Power connector 120 enables cable core 144 of the shielded high-voltage conductor to be contacted with a mating connector (not shown) of the aggregate in plugging direction S. As described above, the power connector can comprise a plug or a socket, thereby enabling a connection in plugging direction S.

Shield header 110 comprises a manufacturer-defined shield header contact, wherein shield header 110 forms a shield path at least in part between shield conductor 142 of the shielded high-voltage conductor and a shield housing of aggregate 120 and wherein the shield housing comprises a user-defined interface opening so that the mating connector is contactable to the power connector. As described above, the shield header can have a hollow cylindrical shape, whereby shielding of the power connection is made possible. The shield header contact enables the shield path between the shield housing and the shield conductor to be closed.

Multifunctional adapter 300 comprises a user-defined aggregate connection section for the electromechanical coupling to shield housing 1200 of the aggregate and a manufacturer-defined shield header opening extending perpendicular to plugging direction S so that the power connector is contactable to the mating connector. Multifunctional adapter 300 and the shield header contact can be coupled to form a unit. This enables that an adapter section between the user-defined aggregate connection section and the manufacturer-defined shield header opening electrically closes the shield path between the shield housing of the aggregate and shield conductor 142.

As described above, the shield header can have a hollow cylindrical shape which enables the shielding of the plug connection. The shield header contact enables the shield path between the shield housing and the shield conductor to be closed.

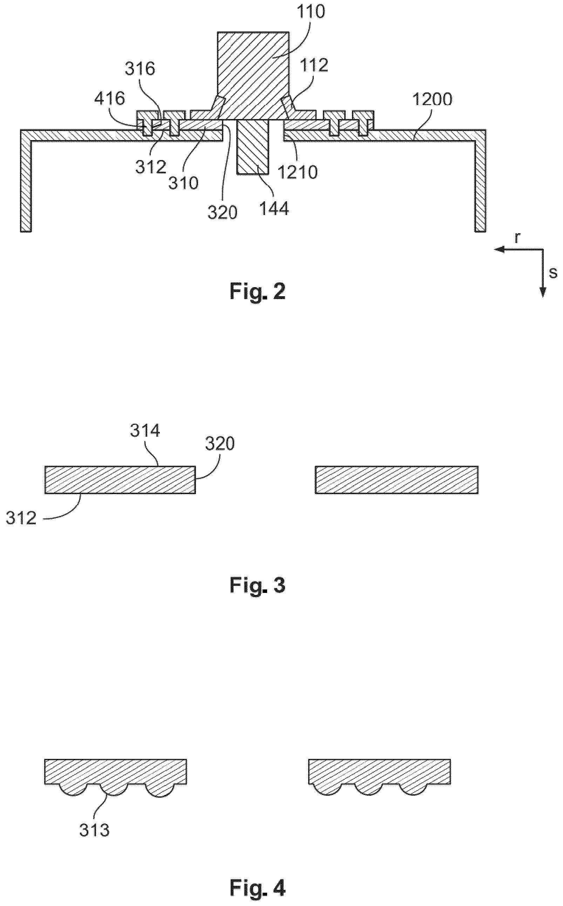

Figure 2 shows parts for a connector kit 100 according to a first example in a sectional view.

The power connector is not shown and cable core 144 according to the example of Figure 2 can be connected to a mating connector (not shown) within shield housing 1200 of the aggregate in plugging direction S. Alternatively, according to an example not shown, the power connector can be arranged within shield header 110.

The sectional view of Figure 2 shows that the shield housing can comprise a user-defined interface opening 1210. The interface opening extends at least in part perpendicular to plugging direction S in a radial direction r. This interface opening 1210 enables the power connector to be contacted with the mating connector in the plugging direction.

The multifunctional adapter has a user-defined aggregate connection section 310 for the electromechanical coupling to shield housing 1200. As shown in Figure 2, aggregate connection section 310 comprises, for example, an adapter contact surface 312. Aggregate connection section 310 enables the electromechanical coupling of the multifunctional adapter to shield housing 1200.

The multifunctional adapter also comprises a manufacturer-defined shield header opening 320. Shield header opening 320 extends at least in part in a direction perpendicular to plugging direction S, presently therefore in radial direction r. Shield header opening 320 enables the power connector to be contactable to the mating connector.

Although aggregate connection section 310 and shield header opening 320 in Figure 1 have the same size, this does not have to be the case; aggregate connection section 310 can be smaller or larger than shield header opening 320.

A manufacturer-defined shield header contact 112 is provided between shield header 110 and the multifunctional adapter. The multifunctional adapter and the shield header contact are manufactured separately. The separate parts are then coupled by the manufacturer to form a unit. Adapter section 310 therefore enables aggregate connection section 312 to be manufactured in a user-defined manner. This leads to simplification, since shield header 110 with shield header contact 112 does not have to be newly matched by the manufacturer for the specific user, in particular shield properties do not have to be newly matched. Furthermore, this enables the shield path between shield housing 1200 of the aggregate and shield conductor 144 to be electrically closed.

The multifunctional adapter shall now be described in detail with reference to Figures 2 to 4. As shown in Figure 3, the multifunctional adapter can have the shape of a plate. The plate there has two flat surfaces that are disposed opposite one another. A first surface can be adapter contact surface 312 mentioned above which is connected to shield housing 1200 of the aggregate. The second oppositely disposed surface is referred to hereafter as connector surface 314.

Provided in the multifunctional adapter is shield header opening 320. The latter can be adapted by the manufacturer to the shield header.

This structure of the multifunctional adapter makes it easy to manufacture the multifunctional adapter, e.g. as a punched and bent member. This makes it possible to minimize the design effort, since shield header opening 320 can be matched in a precise fit to shield header 110 and in particular to shield header contact. This also makes it possible for the electrical properties up to and including adapter section 310 to be controlled by the manufacturer of the connector kit.

As shown in Figure 2, adapter contact surface 312 of the aggregate connection section electrically contacts shield housing 1200 in plugging direction S. This enables particularly efficient shield contacting, since the contact surface can be enlarged in a simple manner, in particular in radial direction r.

In order to further increase the contact area and further reduce the contact resistance, the adapter contact surface can be structured, as shown in the variant in Figure 4.Coatings can be provided or the adapter contact surface can have a structure 313 by a method such as embossing or etching. In particular, this can be a microstructure Such microstructuring forms unevenness which can penetrate the possibly present electrically insulating surface layers of the shield contact header to be contacted. This significantly reduces the electrical contact resistance at the boundary surface to the shield contact header.

The microstructured adapter contact surface can be formed at least in part integrally with the multifunctional adapter. The integral, i.e. integrally formed, production of the microstructured contact region with the multifunctional adapter has the advantage that manufacture and assembly are simplified and the electrical conductivity is enhanced. The microstructured contact region can also be formed as a separate element, such as a screen sheet. This has the advantage that a different material can also be selected for the microstructured contact region than for the respective sleeve.

According to an advantageous further development, the microstructured adapter contact surface is formed at least in part as an additional coating of the multifunctional adapter. Such coating is mounted in one work step together with the multifunctional adapter, but can still comprise a material that differs from the multifunctional adapter.

For example, the microstructured adapter contact surface can be formed at least in part by an embossing, a punching, and/or a screen sheet. The selection of the most suitable embodiment depends on the type of shield housing to be contacted and the subsequent application environment.

According to an advantageous aspect of the present invention, the microstructured adapter contact surface is formed at least in part by cold sprayed surface structuring. Cold spraying is a coating process in the field of thermal spraying. Compared to conventional processes, cold spraying provides particular advantages because the spraying material is neither melted nor fused during the process. This results in a broader and more flexible range of applications than with other thermal processes.

The high kinetic energy of the particles and the associated high degree of deformation when they strike the component generally enable manufacturing homogeneous and very dense layers with a variable layer thickness of a few hundredths of a millimeter up to several centimeters. For example, structure 313 perpendicular to the plugging direction can have an extension of greater than or equal to 0.1 µm and less than or equal to 5 cm and the structure in the plugging direction can have an extension of greater than or equal to 0.1 mm and less than or equal to 5 cm.

For example, metallic layers are produced whose physical and chemical properties hardly differ from those of the starting material of the respective multifunctional adapter. A process gas, preferably nitrogen or helium, is fed to a spray gun at a pressure of up to 50 bar and heated in the gun housing to maximum temperatures of up to 1100°C.

The subsequent expansion of the heated and highly pressurized gas in a convergent-divergent nozzle to ambient pressure results in the process gas being accelerated to supersonic speeds and at the same time cooling down to temperatures of less than 100°C.

The spray powder is injected into the convergent region of the nozzle by way of a powder feed unit and a carrier gas of the same kind and accelerated in the main gas flow to particle speeds of up to 1200 m/s. The particles strike the (in many cases untreated) component surface in the highly focused spray jet, simultaneously deforming the substrate and themselves and forming a firmly adhering, dense, and low-oxide layer having a defined surface roughness.

To further improve the shielding properties, a suitable material can be selected for the multifunctional adapter. For example, the multifunctional adapter can comprise or consist of metal, e.g. stainless steel.

As shown in Figure 2, passage recesses 316 penetrate the aggregate connection section in the plugging direction. A fastening element 416, for example a screw, for fastening the multifunctional adapter to the shield housing is present in each of the passage recesses. The passage recesses 316 make it possible to reduce the contact resistance between multifunctional adapter 300 and shield housing 1200.

For example, the passage recess can be an elongate hole. An elongate hole is a term from the field of manufacturing technology and refers to a long hole or an elongated passage bore in a workpiece. This type of hole has an elongated, rectangular or elliptical shape, unlike a circular hole. This means that the multifunctional adapter can be manufactured having larger tolerances.

In the example in Figures 2 to 4, the shield header contact contacts the multifunctional adapter in plugging direction S, for example, by attaching the shield header contact to connector surface 316, for example, by soldering or gluing.

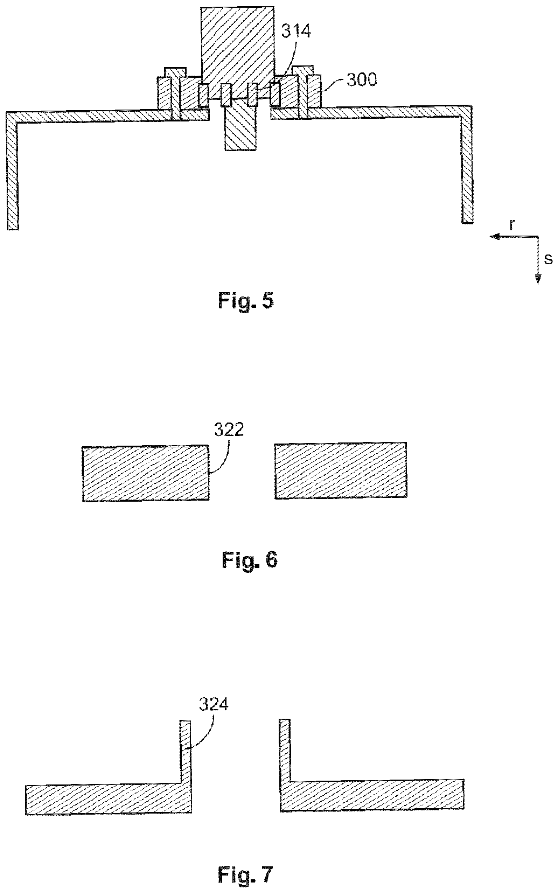

Figures 5 to 7 show an alternative for contacting the shield header contact in plugging direction S. As shown in Figure 5, shield header contact 314 contacts multifunctional adapter 300 perpendicular to plugging direction S, i.e. in radial direction r. This enables a force-fit connection between multifunctional adapter 300 and the shield header contact. In particular, manufacturer-defined shield header contact 314 in the shield header opening contacts the multifunctional adapter.

For this purpose, it can be provided that the multifunctional adapter is a thick plate, as shown in Figure 6, for example. This increases the contact surface of the shield header opening in the plugging direction. For example, contact surface 322 has a thickness in the plugging direction greater than or equal to 2 mm and less than or equal to 20 mm. For example, the multifunctional adapter has the same thickness. Alternatively, contact surface 322 can be enlarged by providing a contact cylinder 324 extending in plugging direction S at the multifunctional adapter, as shown in Figure 7. Additionally or alternatively, the contact surface of Figure 7 can be configured to be the same as contact surface 322 of Figure 6 and can be manufactured to save material by reducing the thickness of the plate everywhere except at the contact surface 322.

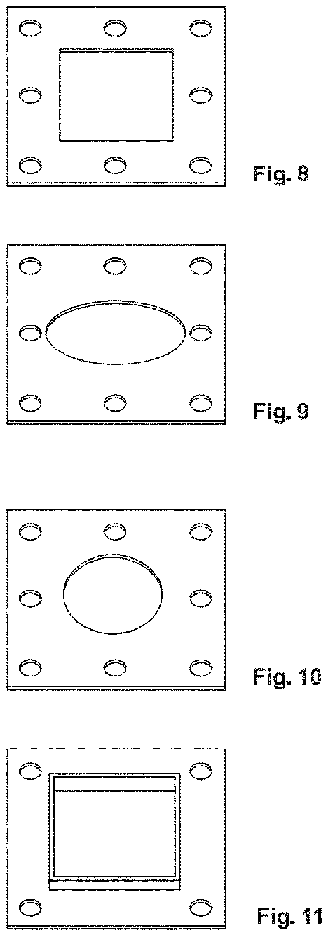

Further examples of multifunctional adapters are shown in Figures 8 to 11. In particular, the shield header opening of the multifunctional adapter can be adapted to the shield header and/or the shield header contact defined by the manufacturer. Although each of the multifunctional adapters shown in Figures 8 to 11 comprises a passage recess, the aggregate connection part can alternatively be connected to the shield housing, e.g. by way of conductive adhesive.

As shown, for example, in Figures 8 to 10, each aggregate connection section can be provided with the same shape and the same hole pattern. This allows the user to choose from a variety of manufacturer-defined shield header contacts, all of which are compatible with the user's shield housing.

Additionally or alternatively, as shown in Figure 11, the aggregate connection section can be adapted for the user. For example, the hole pattern can be customized in a simple manner. Additionally or alternatively, the shape of the aggregate connection section can be adapted.

According to an example not shown, the connector kit of the above examples can comprise a second multifunctional adapter, wherein the second multifunctional adapter comprises a second user-defined aggregate connection section (not shown) for the electromechanical coupling to a second shield housing of a second aggregate and a second manufacturer-defined shield header opening perpendicular to the plugging direction so that the power connector is contactable to the mating connector. In this case, the second user-defined aggregate connection section differs in shape from the user-defined aggregate connection section, and the second manufacturer-defined shield header opening and the manufacturer-defined shield header opening are the same in shape. This allows the manufacturer to change the user-defined aggregate connection section for a manufacturer-defined shield header contact in a simple manner.

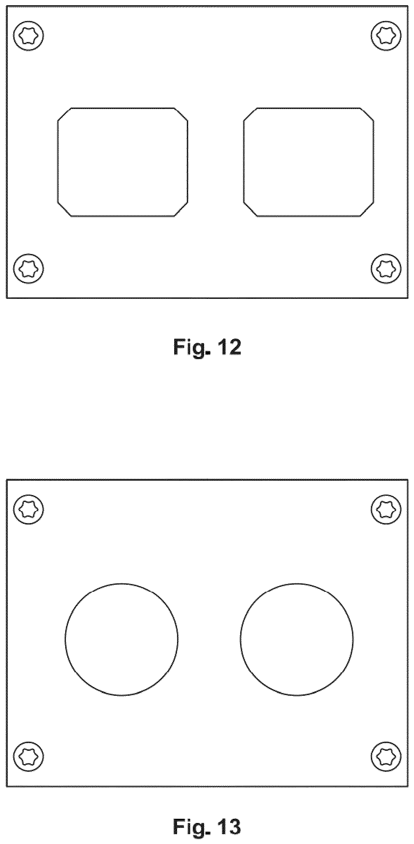

Further examples of multifunctional adapters are shown in Figures 12 to 13. The multifunctional adapter comprises a plurality of manufacturer-defined shield header openings. This enables a plurality of power connectors to be contacted with a plurality of mating connectors for an aggregate. In particular, the shield housing of the aggregate can comprise only one interface opening and the multifunctional adapter enables a plurality of power connectors to be connected in a simple manner.

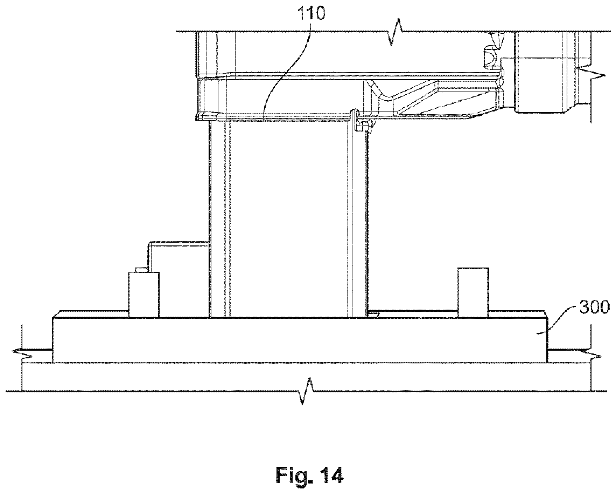

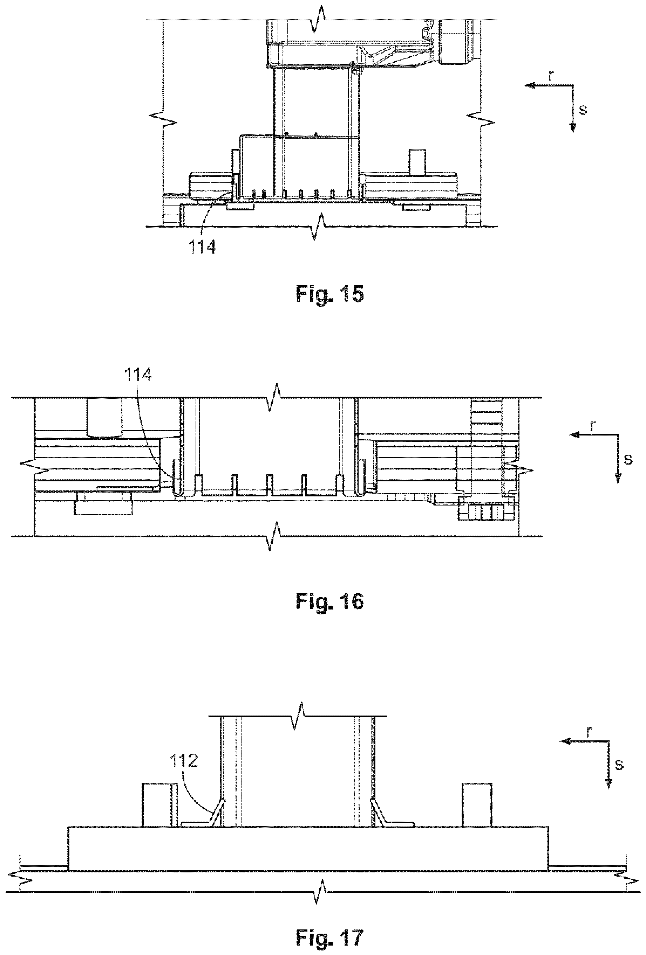

Figures 14 to 16 show a first example of a connector kit for contacting a shield housing 1200 to an interface opening 1210, as shown in Figure 19. In this case, shield header 110 is inserted into manufacturer-defined shield header opening 320 of the multifunctional adapter 300. In particular, Figures 15 and 16 show that shield header contacts 114 in the manufacturer-defined shield header opening contacting the multifunctional adapter perpendicular to the plugging direction. In other words, contact there is established in the radial direction. For example, shield header contacts 114 are lamellae that extend in a direction opposite to plugging direction S.

Alternatively, as shown in Figure 17, shield header contacts 112 running perpendicular to the plugging direction can also be provided. In other words, contact there is established in the axial direction. In this case, the shield header covers the manufacturer-defined shield header opening.

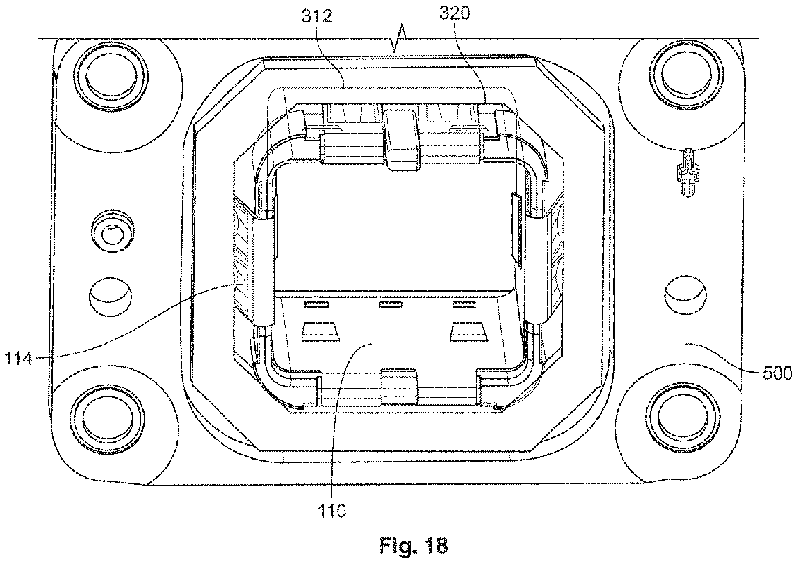

Figure 18 shows a further example of part of the connector kit. Figure 18 shows shield header 110 with shield header contacts 114. In this case, shield header 110 has a cylindrical shape with a rectangular base. Shield header contacts 114 are lamellae that have a U-shaped bending section. The multifunctional adapter contacts shield header contacts 114 in shield header opening 320 and comprises an aggregate connection section 312 for contacting a shield housing (not shown) of an aggregate.

According to one example, the multifunctional adapter and the shield header are coupled to form an inseparable unit. Inseparable means that the two parts cannot be separated from one another without destroying the connector kit. This ensures the electromechanical connection by the manufacturer. Furthermore, this means that the two parts are manufactured separately and are joined together only in a subsequent assembly step. For example, the two parts can be joined by gluing, soldering, welding or the like.

Even if the power connector is not shown in Figure 18, the power connector can be inseparably connected to the shield header and the multifunctional adapter.

According to the example in Figure 7, the connector kit can contain a connector housing 500. Connector housing 500 makes it possible to couple the multifunctional adapter and the shield header to form a unit. In other words, it can be provided that the multifunctional adapter and the shield header cannot be separated without destroying connector housing 500. This can be made possible, for example, in that connector housing 500 comprises an injection-molded member. This injection-molded member can be molded in part around the multifunctional adapter and the shield header. This enables particularly simple, precise, and cost-effective manufacture of the connector kit.

Although not shown in Figure 18, the multifunctional adapter of the connector kit comprises passage recesses in aggregate connection section 312. Alternatively, passage recesses can be provided in the connector housing to couple the connector kit to the shield housing.

Each of the connector kits described above can also comprise a crimp connection 130 for closing the shield path between the shield header and the shield conductor of the shielded high-voltage conductor, as shown in schematic Figure 1. This enables a particularly cost-effective connection between the shield header and shield conductor 142.

Each of the connector kits described above can furthermore include a shielded connector, wherein a shield of the shielded connector connects the shield header to the shield conductor and wherein an inner conductor of the shielded connector connects the power connector to the cable core.

A further example, not shown in the figures, relates to a manufacturing method for a connector kit, as shown in Figures 1 to 18, for connecting a shielded high-voltage conductor to an aggregate.

The manufacturing method comprises providing a power connector for contacting a cable core of the shielded high-voltage conductor to a mating connector of the aggregate in the plugging direction. Furthermore, the method comprises providing a shield header with a manufacturer-defined shield header contact, wherein the shield header forms a shield path at least in part between a shield conductor of the shielded high-voltage conductor and a shield housing of the aggregate and wherein the shield housing comprises a user-defined interface opening so that the mating connector is contactable to the power connector. This enables the shield header and the power connector to be predefineable. For example, they can be selected by the user from a manufacturer's catalog.

For customization, the manufacturing method additionally relates to the manufacture of a multifunctional adapter with a user-defined aggregate connection section for the electromechanical coupling to the shield housing of the aggregate and a manufacturer-defined shield header opening extending perpendicular to the plugging direction so that the power connector is contactable to the mating connector. This enables a multifunctional adapter to be manufactured for the user in a simple manner.

Finally, as part of the manufacturing process, the multifunctional adapter and the shield header are coupled to form a unit so that an adapter section between the user-defined aggregate connection section and the manufacturer-defined shield header opening electrically closes the shield path between the shield housing of the aggregate and the shield conductor. This makes it easy for the manufacturer of the connection kit to provide the shield path.

According to one example, the manufacturing process can comprise a housing integration step, wherein the multifunctional adapter and the shield header are integrated into a connector housing by housing integration. For example, the housing integration comprises an injection-molding process for manufacturing the connector housing as an injection-molded member.

A further example, not shown in the figures, relates to a connection method for electrically closing a shield path between a shield conductor of a shielded high-voltage conductor and a shield housing of an aggregate. The method comprises the step of providing a connector kit according to one of the above examples or manufactured according to the above method. Finally, the method comprises electrically contacting an adapter contact surface of the aggregate connection section to the shield housing in the plugging direction. This allows the user to connect the shield housing to the shield conductor in a simple manner.

The connection method can furthermore comprise the step of mechanically connecting the aggregate connection section to the shield housing, For example, a connector housing can be connected to the shield housing. Additionally or alternatively, the mechanical connection can furthermore comprise that a fastening element is passed through a passage recess that penetrates the aggregate connection section in the plugging direction. Fixing the fastening element in a fastening element receptacle of the shield housing enables the contact resistance to be low and the contact to be long-lasting.

**List of reference numerals:**

| **Reference numeral** | **Description** |
|---|---|
| 100 | high-voltage plugging system |
| 110 | shield header |
| 112 | shield header contact |
| 114 | shield header contact |
| 120 | power connector |
| 130 | crimp connection |
| 140 | shielded high-voltage conductor |
| 142 | shield conductor |
| 144 | cable core |
| 300 | multifunctional adapter |
| 310 | aggregate connection section |
| 312 | adapter contact surface |
| 313 | structure |
| 314 | connector surface |
| 316 | passage recess |
| 320 | shield header opening |
| 322 | contact surface |
| 324 | contact cylinder |
| 416 | fastening element |
| 1100 | high-voltage plugging system |
| 1110 | shield header |
| 1120 | power connector |
| 1130 | crimp connection |
| 1142 | shield conductor |
| 1200 | shield housing |
| 1210 | interface opening |
| 2230 | user adapter |
| 2232 | shield header opening |
| S | plugging direction |
| r | radial direction |

## Claims

1. Connector kit (100) for connecting a shielded high-voltage conductor to an aggregate, said connector kit (100) comprising:
a power connector (120) for contacting a cable core (144) of said shielded high-voltage conductor to a mating connector of said aggregate in the plugging direction (S),
a shield header (110) with a manufacturer-defined shield header contact (112, 114), wherein said shield header (110) forms a shield path at least in part between a shield conductor (142) of said shielded high-voltage conductor and a shield housing (1200) of said aggregate, and wherein said shield housing (1200) comprises a user-defined interface opening (1210) so that said mating connector is contactable to said power connector,
a multifunctional adapter (300) with a user-defined aggregate connection section (312) for the electromechanical coupling to said shield housing (1200) of said aggregate and a manufacturer-defined shield header opening (320) extending perpendicular to said plugging direction (S) so that said power connector is contactable to said mating connector,
wherein said multifunctional adapter (300) and said shield header contact (112) can be coupled to form a unit so that an adapter section (310) between said user-defined aggregate connection section (312) and said manufacturer-defined shield header opening (320) electrically closes the shield path between said shield housing (1200) of said aggregate and said shield conductor (142).

2. Connector kit (100) according to claim 1, comprising a second multifunctional adapter, said second multifunctional adapter comprising:
a second user-defined aggregate connection section for the electromechanical coupling to a second shield housing of a second aggregate and
a second manufacturer-defined shield header opening extending perpendicular to said plugging direction (S) so that said power connector is contactable to said mating connector,
wherein said second user-defined aggregate connection section differs from said user-defined aggregate connection section (310) in shape, and
wherein said second manufacturer-defined shield header opening and said manufacturer-defined shield header opening (320) have the same shape.

3. Connector kit (100) according to one of the preceding claims, wherein an adapter contact surface (312) of said aggregate connection section (310) electrically contacts said shield housing (120) in said plugging direction,
in particular wherein said adapter contact surface (312) is microstructured.

4. Connector kit (100) according to one of the preceding claims, wherein a passage recess (316) penetrates said aggregate connection section (310) in said plugging direction (S), wherein said passage recess (316) serves to receive a fastening element (416) for fastening said multifunctional adapter (300) to said shield housing (1200).

5. Connector kit (100) according to claim 4, wherein said passage recess (316) comprises an elongate hole.

6. Connector kit (100) according to one of the preceding claims, wherein said multifunctional adapter (300) and said shield header (110) are coupled to form an inseparable unit, in particular wherein said power connector (120), said shield header (110), and said multifunctional adapter (300) are inseparably connected to one another.

7. Connector kit (100) according to one of the preceding claims, furthermore comprising a connector housing (500), wherein said multifunctional adapter (300) and said shield header (110) are coupled to form a unit in said connector housing (500), in particular wherein said shield header (110) and said multifunctional adapter (300) are inseparably connected to one another.

8. Connector kit (100) according to claim 7, wherein said connector housing (500) comprises an injection-molded member that is injection-molded at least in part around said multifunctional adapter (300) and said shield header (110).

9. Connector kit (100) according to one of the preceding claims, wherein said manufacturer-defined shield header contact (114) contacts said multifunctional adapter (300) in said manufacturer-defined shield header opening (320) perpendicular to said plugging direction (S).

10. Connector kit (100) according to one of the preceding claims, furthermore comprising a crimp connection (130) for closing the shield path between said shield header (110) and said shield conductor (142) of said shielded high-voltage conductor and/or furthermore comprising a shielded connector, wherein a shield of said shielded connector connects said shield header (110) to said shield conductor (142), and wherein an inner conductor of said shielded connector connects said power connector (120) to said cable core (144).

11. Connector kit (100) according to one of the preceding claims, wherein said multifunctional adapter (300) comprises a plurality of manufacturer-defined shield header openings so that a plurality of power connectors is contactable to a plurality of mating connectors.

12. Manufacturing method for a connector kit (100) for connecting a shielded high-voltage conductor to an aggregate, the manufacturing method comprising:
providing a power connector (120) for contacting a cable core (144) of said shielded high-voltage conductor to a mating connector of said aggregate in said plugging direction (S),
providing a shield header (120) with a manufacturer-defined shield header contact (112, 114), wherein said shield header (120) forms a shield path at least in part between a shield conductor (144) of said shielded high-voltage conductor and a shield housing (1200) of said aggregate, and wherein said shield housing (1200) comprises a user-defined interface opening (1210) so that said mating connector is contactable to said power connector,
manufacturing a multifunctional adapter (300) with a user-defined aggregate connection section (312) for the electromechanical coupling to said shield housing (1200) of said aggregate and a manufacturer-defined shield header opening (320) extending perpendicular to said plugging direction (S) so that said power connector is contactable to said mating connector,
coupling said multifunctional adapter (300) and said shield header contact (112) to form a unit so that an adapter section (310) between said user-defined aggregate connection section (312) and said manufacturer-defined shield header opening (320) electrically closes the shield path between said shield housing (1200) of said aggregate and said shield conductor (144).

13. Manufacturing method according to claim 12, further comprising the step of:
housing integration of said multifunctional adapter (300) and said shield header (110) into a connector housing (500), in particular wherein said housing integration comprises an injection molding process for manufacturing said connector housing (500) as an injection-molded member.

14. Connection method for electrically closing a shield path between a shield conductor (142) of a shielded high-voltage conductor and a shield housing (1200) of an aggregate, the method comprising:
providing a connector kit (100) according to one of the preceding claims 1 to 13 or manufactured according to the method according to one of the preceding claims 12 to 13,
electrically contacting an adapter contact surface (312) of said aggregate connection section (310) to said shield housing (1200) in said plugging direction (S).

15. Connection method according to claim 14, furthermore comprising
mechanically connecting said aggregate connection section (310) to said shield housing (1200),
in particular, the mechanical connection furthermore comprising:
passing a fastening element (416) through a passage recess (316) that penetrates said aggregate connection section (310) in said plugging direction (S), and
fixing said fastening element (416) in a fastening element receptacle of said shield housing (1200).
